# EUROPEAN PATENT SPECIFICATION

(11) **EP 1 361 084 B1**
(45) Date of publication and mention of the grant of the patent: **15.08.2007**
(21) Application number: 03010360.0
(22) Date of filing: 08.05.2003
(51) Int. Cl.: B60G 7/00, B60B 37/00, B60B 35/02, B62D 17/00

(54) **Mounting structure for a wheel carrier of a motor vehicle**
Montageanordnung für einen Radträger eines Kraftfahrzeugs
Structure de montage d'un porte-roue d'un véhicule automobile

(30) Priority: 10.05.2002 IT TO20020397
(43) Date of publication of application: 12.11.2003
(60) Divisional application: 07111014.2
(73) Proprietor: Sistemi Sospensioni S.p.A., 20011 Corbetta MI (IT)
(72) Inventor: Gerrard, Miles Barnaby, 10124 Torino (IT)
(74) Representative: Rondano, Davide

(56) References cited:
- DE-A- 2 324 645
- DE-B- 1 077 538
- DE-C- 973 418
- FR-A- 2 484 926
- FR-A- 2 621 277
- US-A- 3 693 746
- US-A- 3 893 701
- US-A- 5 228 717
- US-A- 6 152 468
- PATENT ABSTRACTS OF JAPAN vol. 013, no. 484 (M-886), 2 November 1989 (1989-11-02) -& JP 01 190511 A (MAZDA MOTOR CORP), 31 July 1989 (1989-07-31)

## Description

The present invention relates to a mounting structure for a wheel carrier of a motor vehicle, intended to connect the wheel carrier with a structural member of the suspension of the wheel, as specified in the preamble of claim 1.

A mounting structure of this kind is known from JP 01190511.

In the following description the invention will be illustrated for the sake of brevity with reference to its application for the mounting of the wheel carrier of a non-steering wheel. This application, however, is not to be construed as limiting the scope of protection of the patent, being it clear for the skilled person in the art that the structure of the invention is also suitable for a steering wheel.

Each of the non-steering wheels of a motor vehicle is rotatably mounted about a pin-like member, known as spindle, which can be fixed directly onto a member of the suspension of that wheel, such as a trailing arm connected with a twist beam in an interconnected suspension system, or with a strut member articulated in its turn to at least one member of the suspension, such as a pair of wishbones in an independent suspension system.

Due to its simplicity, one of the most commonly used suspension arrangements for the rear wheels is the interconnected suspension system, in which a transverse twist beam is connected at its lateral ends with a pair of trailing arms, each for a respective wheel. These arms are articulated at their front ends to the vehicle structure and have respective wheel carrier spindles connected therewith usually by welding. Such a rigid mounting of the wheel carrier on a structural member of the suspension (here, a trailing arm) causes the displacement of the wheel carrier under load, brought on by the lateral forces during cornering and the longitudinal forces during breaking or in case of impact, to be controlled mainly by the compliance of the bushes for articulation of the suspension member to the vehicle structure. Where simple suspension arrangements, such as the above-mentioned interconnected suspension system, are used, the unavoidable conflict between the requirements for longitudinal flexibility on the one hand and transverse stiffness of the suspension system on the other hand cannot be solved satisfactorily, since the mere connection of the suspension system to the vehicle structure by two bushes does not provide the required behaviour.

Even independent suspension systems, which in their simplest embodiments comprise one or two transverse arms to which the strut and its wheel carrier spindle are articulated, do not enable a satisfactory control of the elastic behaviour of the suspension in response to the forces acting on the wheel carrier, unless more complex and expensive arrangements, such as, for example, the multilink systems, in which a number of rods connect the wheel carrier strut with the vehicle structure, are adopted.

It is the object of the present invention to provide a simple and inexpensive arrangement for improving the elasto-kinematic performances of a suspension for a motor-vehicle wheel.

This object is fully achieved according to the present invention by virtue of a mounting structure as defined in independent Claim 1 for connection of the wheel carrier of a motor-vehicle wheel with a structural member of the suspension of that wheel. Preferred embodiments of the structure of the invention are specified in dependent claims.

In short, the invention is based on the idea of providing a flexible connection between the wheel carrier and a structural member of the suspension, such as the trailing arm of a twist-beam axle or a wishbone, through a structure capable of providing at least one degree of freedom of the structural type about a shear axis, the orientation of which can be determined at the design stage depending on the required operational specifications. By virtue of such a flexible connection, the wheel carrier tends to swing about the shear axis under the effect of the forces acting on the wheel, instead of transmitting rigidly these forces to the associated structural member of the suspension.

Preferably, the mounting structure comprises a pair of properly orientated blade-like elements, connected on the one side with a plate portion carrying the wheel carrier spindle and on the opposite side with the associated structural member of the suspension.

The invention will be described hereinafter in greater detail, purely by way of non-limiting example, with reference to the appended drawings, in which:
Figures 1, 2 and 3 are perspective views of respective preferred embodiments of a mounting structure with one structural degree of freedom according to the invention, for connection of the wheel-carrier spindle with a trailing arm of an interconnected suspension system;
Figure 4 is a perspective view of a very similar mounting structure with two structural degrees of freedom not forming part of the invention as claimed, for connection of the wheel carrier spindle with a trailing arm of an interconnected suspension system; and
Figures 5A, 5B and 5C are a perspective view, a plan view and a side elevation view, respectively, of a preferred embodiment of a mounting structure with one structural degree of freedom according to the invention, for connection of the wheel carrier spindle with a pair of wishbones of an independent suspension system.

In the description and the claims which follow, terms such as "longitudinal" and "transverse", "inner" and "outer", "front" and "rear" are to be intended as referred to the mounted condition on the vehicle.

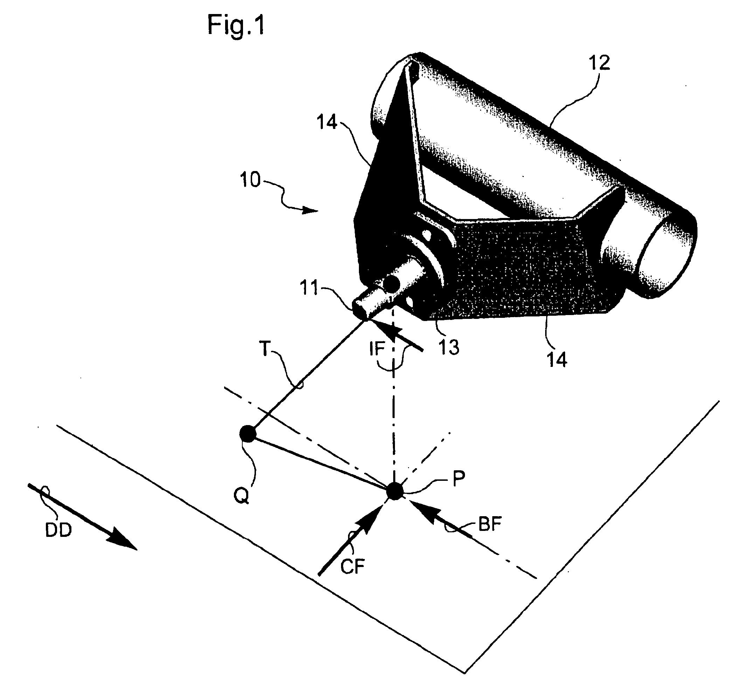

By referring at first to Figure 1, a mounting structure for connection of the spindle 11 of a wheel with an arm 12 of the suspension of that wheel, such as, for example, a trailing arm attached to an end of a twist beam in an interconnected rear suspension system, is generally indicated 10. The structure 10 comprises basically a portion 13 for support of the spindle 11, which forms a longitudinal vertical wall on the outer surface of which there is attached the spindle, and a pair of flexible elements 14 for connection between the portion 13 and the suspension arm 12. In the embodiment illustrated in Figure 1, the elements 14 are formed integrally with the portion 13 and welded at their free ends to the arm 12.

Each connecting element 14 is a straight beam the cross-section of which has inertial characteristics such that the element is compliant under bending in a direction perpendicular to its own longitudinal axis. The cross-section may be, for example, axially symmetrical about first and second axes perpendicular to each other, the moment of inertia about the first axis being much greater than that about the second axis, whereby the element 14 is compliant under bending about this second axis. As shown in the figures, the elements 14 are formed preferably as blades with a thin rectangular cross-section, so as to be flexible in a direction perpendicular to the middle plane of the cross-section.

By virtue of the inherent flexibility of the connecting elements 14, the structure 10 does not act as a rigid body, but provides a degree of freedom of "structural" type about an axis T, or shear axis, since it allows a certain amount of torsional deformation about this axis as a result of the stresses transmitted by the wheel. The axis T may be constructed, approximately, as intersection of the planes passing through the longitudinal axis and the axis of bending of both elements 14. Therefore, in case of elements with thin rectangular cross-section the axis T is obtained by intersecting the middle planes of these elements.

The degree of freedom about the shear axis T has been previously referred to as "structural", since it is not defined by a geometrical constraint (as a kinematic degree of freedom is, on the contrary), but by the characteristics of flexibility of the structure. The orientation of the axis T and the stiffness of the structure in response to torsional stresses about that axis depend on the inertial characteristics of the cross-sections of the elements 14. Therefore, by properly selecting the shape and the orientation of these cross-sections, an elastic behaviour of the structure fulfilling the required design specifications is attainable.

In particular, it is possible to concentrate the required compliance of the suspension in the wheel carrier mounting structure, leaving to the articulation bushes (preferably made of damping material) substantially the sole task of providing for insulation of high frequencies. Thus, the traditional shortcoming of assigning the task of solving the above compromise between comfort and handling just to the articulation bushes of the suspension is avoided and the different operational requirements are allotted in a better way among the different parts of the suspension system.

In the embodiment of Figure 1, the two flexible connecting elements 14 define a shear axis T passing through the axis of rotation of the wheel and inclined both in a horizontal plane and in a longitudinal vertical plane. By referring to Figure 1, the point of intersection between the axis T and the road surface is indicated Q, whereas the theoretical point of contact between the wheel (not shown) and the road surface is indicated P.

Moreover, the three forces acting on the wheel, that is, the breaking force, the centripetal force and the longitudinal impact force are indicated BF, CF and IF, respectively. The breaking force BF is applied at the point of contact P and acts longitudinally in the opposite direction to the direction of driving DD. The centripetal force CF is applied at the point of contact P and acts transversally inwards or outwards depending on the vehicle moving along a leftward or rightward curve, respectively. Finally, the impact force IF is applied at the centre of the wheel and acts longitudinally opposite to the direction of driving DD.

The breaking force BF and the impact force IF act with a short, when not even null, lever arm with respect to the shear axis T, whereby the mounting structure 10 undergoes a very small torsional yielding about the axis T. The structure 10, therefore, reacts almost rigidly to these forces. The lateral centripetal force CF, instead, acts with a large lever arm and then brings on a considerable torsional deformation of the structure. However, the effect of this deformation, which increases the toe-in of the wheel, is advantageous, for example, in an interconnected suspension system, since it compensates for the opposite effect due to the rigid rotation of the twist beam and trailing arms assembly allowed by the compliance of the bushes of articulation of the arms.

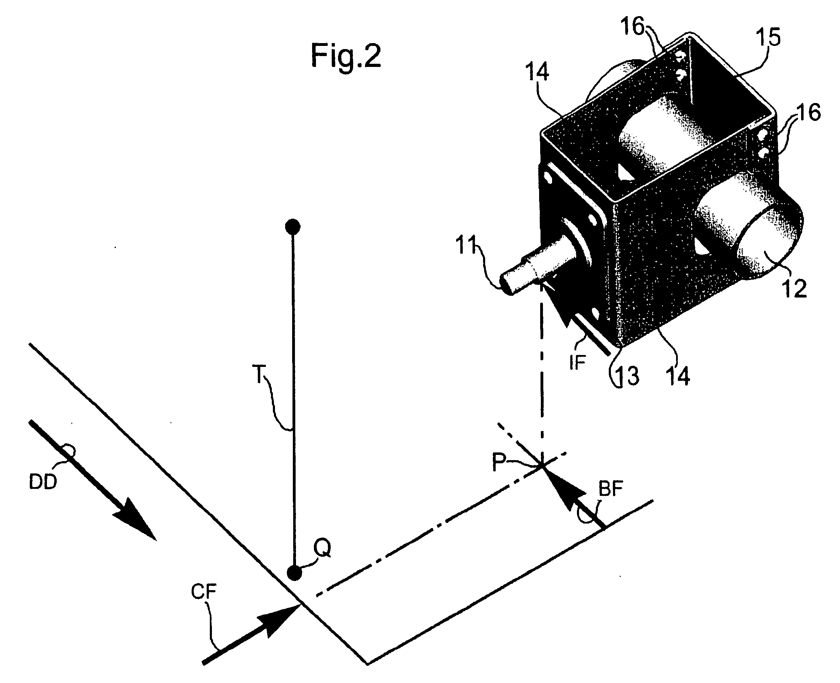

In the embodiment of Figure 2, the two flexible connecting elements 14 are not directly attached to the suspension arm 12, but are secured, for example by means of rivets 16, to a bottom plate 15 welded to the arm 12. Here, the shear axis T is orientated vertically and is located outside the wheel, substantially in the same vertical plane passing through the axis of rotation of the wheel. With the same reasoning as above, it can be appreciated that this second embodiment provides a high stiffness with respect to the centripetal force, but a low stiffness with respect to both the breaking force and the impact force, thereby ensuring a good damping of bumps and a good handling in curve.

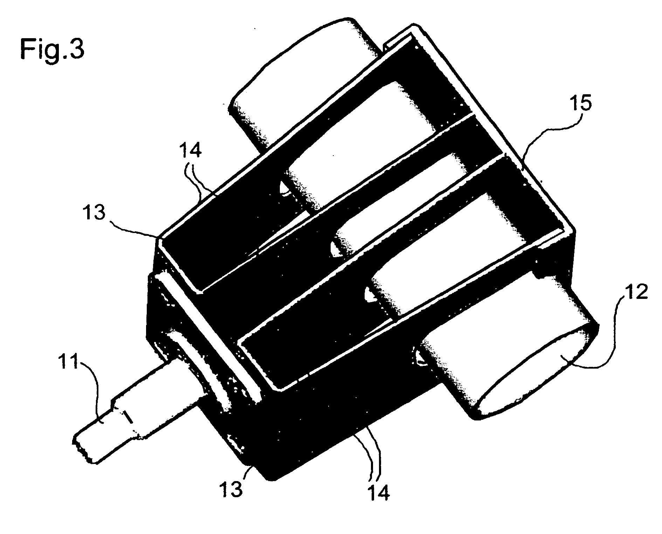

A third embodiment of a mounting structure according to the present invention is illustrated in Figure 3, where parts and elements identical or corresponding to those of Figures 1 and 2 have been given the same reference numerals.

In this case, there are provided two pairs of flexible connecting elements 14 in the form of vertical thin plates, converging two by two towards the outside of the vehicle. As in the example of Figure 2, the flexible elements 14 are attached to a bottom plate 15 welded to the arm 12. Moreover, the elements 14 are integrally connected two by two, on the outer side, by a pair of longitudinal vertical walls 13 to which the wheel spindle 11 is secured. The structure is designed so as to provide a shear axis orientated like that of Figure 2, but to reduce stresses on the flexible elements.

As can be seen, regardless of the number and arrangement of the connecting elements, the idea on which the invention is based is to provide a flexible mounting structure adapted to allow a given torsional compliance about a shear axis of predetermined orientation.

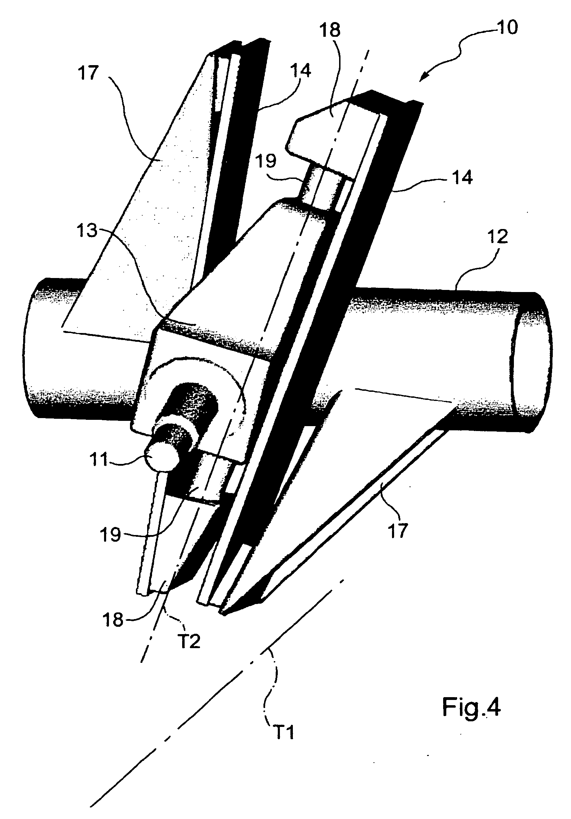

A further mounting structure with two structural degrees of freedom, is shown in Figure 4, where parts and elements identical or corresponding to those of the preceding figures have been given the same reference numerals.

According to this embodiment, a support body 13 provided with a wheel carrier 11 is connected at its upper and lower portions, through a pair of substantially coaxial, cylindrical portions 19, to respective abutment members 18 attached to the free ends of two flexible blade-like elements 14, the opposite ends of which are connected with respective bracket structures 17 carried by the longitudinal arm 12 of the suspension.

According to the example of Figure 4, the two bracket structures 17 extend substantially perpendicular to each other, the one vertically upwards and the other transversely towards the outside of the vehicle, and the blades 14 are orientated such that they converge downwards. By virtue of such an arrangement, the mounting structure has a first shear axis T1, theoretically defined by the geometrical intersection between the middle planes of the blades 14, and a second shear axis T2 corresponding approximately to the axis of the two cylindrical portions 19. The compliance of the structure about this second axis T2 is ensured by the low torsional stiffness of the blades 14.

Clearly, the provision of a further structural degree of freedom gives a wider liberty of action to the designer of the suspension system, since by properly setting the orientation of the two shear axes it is possible to satisfy conflicting operational specifications, which otherwise could be hardly accommodated with each other.

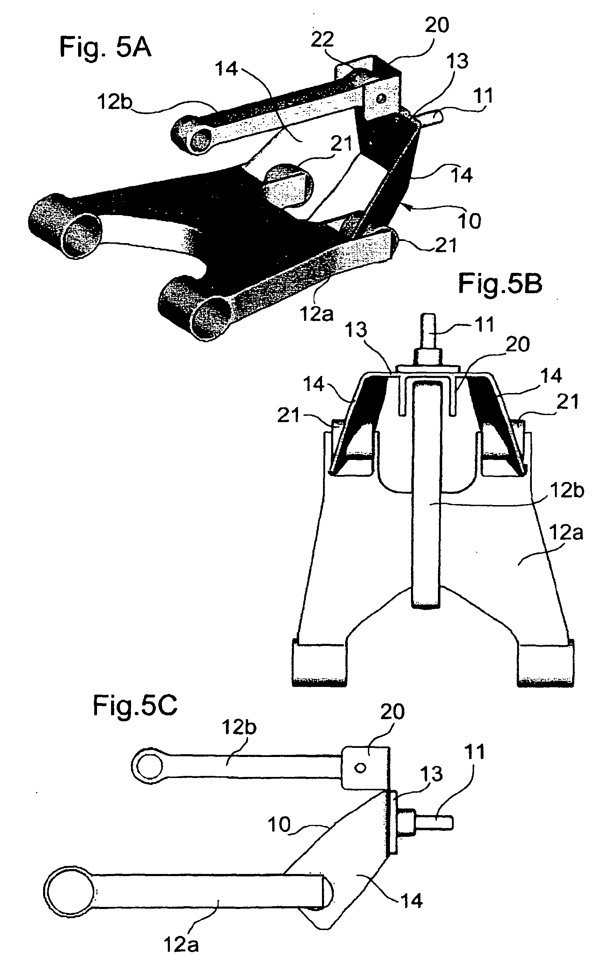

Finally, Figures 5A, 5B and 5C show an example of the application of the invention to an independent suspension system, in which the spindle 11 of the wheel is secured to a flexible mounting structure 10, which has only one structural degree of freedom and is articulated to a first lower transverse arm 12a by means of a pair of bushes 21 and to a second upper transverse arm 12b by means of a bush 22.

The arrangement of the mounting structure 10 is similar to that of Figure 1, in which the spindle 11 is attached to a central plate portion 13 from the opposite ends of which two blade-like elements 14 extend transversely inwards, the elements being articulated here to the lower arm 12a by means of the bushes 21. As to the orientation of the blades 14, similar remarks to those set forth above with reference to the embodiment of Figure 1 apply. A C-shaped fixing bracket 20 extends upwards from the plate portion 13 for articulation to the upper arm 12b by means of a bush 22.

Clearly, the highest stiffness of the mounting structure is achieved with the geometrical axes of the bushes 21 arranged perpendicular to the middle plane of the blades 14. However, nothing prevents from orientating in a different way the axes of the bushes with respect to the blades, as illustrated in the embodiment of Figure 5.

Naturally, the principle of the invention remaining unchanged, embodiments and manufacturing details may vary widely from those described and illustrated purely by way of non-limiting example.

## Claims

1. Mounting structure (10) for connection of a spindle (11) of a motor-vehicle wheel with a structural element (12) of the suspension of that wheel, the structure (10) comprising flexible members (14) arranged to provide the structure (10) with at least one structural degree of freedom about a shear axis (T) of predetermined orientation by virtue of their flexibility or by virtue of their flexibility and their geometry,
**characterised in that** it further comprises a first central portion (13) to which the spindle (11) is attached, and **in that** the flexible members (14) are integrally formed with the first central portion (13).

2. Mounting structure according to Claim 1, **characterised in that** each of the flexible members (14) is formed as a plate-like or blade-like element, so as to be compliant under bending about an axis perpendicular to its middle plane.

3. Mounting structure according to Claim 2, **characterised in that** the flexible members (14) are inclined to each other so as to define a shear axis (T) at the intersection between their middle planes.

4. Mounting structure according to any of Claims 1 to 3, **characterised in that** the flexible members (14) are rigidly connected with the structural element (12) of the suspension.

5. Mounting structure according to any of Claims 1 to 3, **characterised in that** the flexible members (14) are articulated (21) to the structural element (12) of the suspension.

6. Mounting structure according to Claim 5, **characterised in that** the flexible members (14) are inclined to the axis of articulation to the structural element (12) of the suspension.

7. Mounting structure according to any of Claims 1 to 4, **characterised in that** it further comprises a second central portion (15) attached to the structural element (12) of the suspension on opposite sides with respect to the spindle (11) of the wheel, and **in that** the flexible members (14) are attached at their transversely inner ends to the second portion (15).

8. Mounting structure according to any of Claims 1 to 4, **characterised in that** the flexible members (14) are arranged in a substantially upright position, so that the one bears the spindle (11) at the upper portion thereof while the other bears the spindle (11) at the lower portion thereof.

9. Mounting structure according to Claim 8, **characterised in that** it further comprises a pair of bracket-like bodies (17) attached to the structural element (12) of the suspension, the flexible members (14) being cantilevered on those bodies from vertically opposite sides.

10. Mounting structure according to Claim 9, **characterised in that** the bracket-like bodies (17) project from the structural element (12) of the suspension, the one essentially vertically and the other essentially transversely, and **in that** the flexible members (14) converge to each other downwards, thereby assuming a substantially V-shaped arrangement.

## Patentansprüche

1. Befestigungsaufbau (10) für die Verbindung des Achszapfens (11) für das Rad eines Kraftfahrzeugs mit einem Strukturelement (12) der Aufhängung dieses Rads, wobei der Aufbau (10) flexible Elemente (14) enthält, die so angeordnet sind, dass sie mit Hilfe ihrer Flexibilität oder mit Hilfe ihrer Flexibilität und ihrer Geometrie dem Aufbau (10) zumindest einen strukturellen Freiheitsgrad um eine Scherachse (T) mit vorgegebener Ausrichtung verleihen,
**dadurch gekennzeichnet, dass** der Aufbau weiters einen ersten zentralen Teil (13) enthält, an dem der Achszapfen (11) befestigt ist, und dass die flexiblen Elemente (14) mit dem ersten zentralen Teil (13) gemeinsam ausgebildet sind.

2. Befestigungsaufbau gemäß Anspruch 1, **dadurch gekennzeichnet, dass** jedes der flexiblen Elemente (14) als ein plattenförmiges oder bandförmiges Element so ausgebildet ist, um das es bei einer Biegung um eine Achse senkrecht zu seiner Mittelebene nachgeben kann.

3. Befestigungsaufbau gemäß Anspruch 2, **dadurch gekennzeichnet, dass** die flexiblen Elemente (14) zueinander so geneigt sind, dass sie an der Schnittlinie zwischen ihren Mittelebenen eine Scherachse (T) bilden.

4. Befestigungsaufbau gemäß jedem der Ansprüche 1 bis 3, **dadurch gekennzeichnet, dass** die flexiblen Elemente (14) mit dem Strukturelement (12) der Aufhängung starr verbunden sind.

5. Befestigungsaufbau gemäß jedem der Ansprüche 1 bis 3, **dadurch gekennzeichnet, dass** die flexiblen Elemente (14) im Strukturelement (12) der Aufhängung gelenkig gelagert (21) sind.

6. Befestigungsaufbau gemäß Anspruch 5, **dadurch gekennzeichnet, dass** die flexiblen Elemente (14) zur Achse der gelenkigen Lagerung zum Strukturelement (12) der Aufhängung geneigt sind.

7. Befestigungsaufbau gemäß jedem der Ansprüche 1 bis 4, **dadurch gekennzeichnet, dass** der Aufbau weiters einen zweiten zentralen Mittelteil (15) enthält, der am Strukturelement (12) der Aufhängung an entgegengesetzten Seiten im Hinblick auf den Achszapfen (11) für das Rad befestigt ist, und dass die flexiblen Elemente (14) an ihren querverlaufenden Innenenden am zweiten Teil (15) befestigt sind.

8. Befestigungsaufbau gemäß jedem der Ansprüche 1 bis 4, **dadurch gekennzeichnet, dass** die flexiblen Elemente (14) im Wesentlichen aufrecht stehend so angeordnet sind, dass das eine Element an seinem oberen Teil den Achszapfen (11) trägt, während das andere Element an seinem unteren Teil den Achszapfen (11) trägt.

9. Befestigungsaufbau gemäß Anspruch 8, **dadurch gekennzeichnet, dass** der Aufbau weiters ein Paar von halterungsartigen Körpern (17) enthält, die am Strukturelement (12) der Aufhängung befestigt sind, wobei die flexiblen Elemente (14) an diesen Körpern von vertikal gegenüber liegenden Seiten auskragen.

10. Befestigungsaufbau gemäß Anspruch 9, **dadurch gekennzeichnet, dass** die halterungsartigen Körper (17) vom Strukturelement (12) der Aufhängung vorspringen, der eine im Wesentlichen vertikal und der andere im Wesentlichen in Querrichtung, und dass die flexiblen Elemente (14) zueinander nach unten zusammenlaufen, wodurch sie eine im Wesentlichen V-förmige Anordnung annehmen.

## Revendications

1. Structure de montage (10) destinée à raccorder une fusée (11) d'une roue de véhicule motorisé à un élément structurel (12) de la suspension de cette roue, la structure (10) comprenant des éléments flexibles (14) agencés pour doter la structure (10) d'au moins un degré structurel de liberté autour d'un axe de cisaillement (T) d'une orientation prédéterminée en raison de leur flexibilité ou en raison de leur flexibilité et de leur géométrie,
**caractérisée en ce qu'**elle comprend en outre une première partie centrale (13) à laquelle la fusée (11) est fixée, et **en ce que** les éléments flexibles (14) sont formés d'un seul tenant avec la première partie centrale (13).

2. Structure de montage selon la revendication 1, **caractérisée en ce que** chacun des éléments flexibles (14) est formé comme un élément de type plaque ou de type lame, de manière à être souple à la flexion autour d'un axe perpendiculaire à son plan médian.

3. Structure de montage selon la revendication 2, **caractérisée en ce que** les éléments flexibles (14) sont inclinés l'un par rapport à l'autre de manière à définir un axe de cisaillement (T) au niveau de l'intersection entre leurs plans médians.

4. Structure de montage selon l'une quelconque des revendications 1 à 3, **caractérisée en ce que** les éléments flexibles (14) sont raccordés rigidement à l'élément structurel (12) de la suspension.

5. Structure de montage selon l'une quelconque des revendications 1 à 3, **caractérisée en ce que** les éléments flexibles (14) sont articulés (21) sur l'élément structurel (12) de la suspension.

6. Structure de montage selon la revendication 5, **caractérisée en ce que** les éléments flexibles (14) sont inclinés par rapport à l'axe d'articulation de l'élément structurel (12) de la suspension.

7. Structure de montage selon l'une quelconque des revendications 1 à 4, **caractérisée en ce qu'**elle comprend en outre une seconde partie centrale (15) fixée à l'élément structurel (12) de la suspension sur les côtés opposés par rapport à la fusée (11) de la roue, et **en ce que** les éléments flexibles (14) sont fixés à leurs extrémités transversalement internes à la seconde partie (15).

8. Structure de montage selon l'une quelconque des revendications 1 à 4, **caractérisée en ce que** les éléments flexibles (14) sont agencés dans une position sensiblement verticale, de sorte que l'un porte la fusée (11) au niveau de la partie supérieure de celle-ci tandis que l'autre porte la fusée (11) au niveau de la partie inférieure de celle-ci.

9. Structure de montage selon la revendication 8, **caractérisée en ce qu'**elle comprend en outre une paire de corps du type support (17) fixés à l'élément structurel (12) de la suspension, les éléments flexibles (14) étant en porte-à-faux sur ces corps depuis les côtés verticalement opposés.

10. Structure de montage selon la revendication 9, **caractérisée en ce que** les corps de type support (17) se projettent depuis l'élément structurel (12) de la suspension, l'un essentiellement verticalement et l'autre essentiellement transversalement, et **en ce que** les éléments flexibles (14) convergent l'un par rapport à l'autre vers le bas, formant de ce fait un agencement sensiblement en forme de V.
